# EUROPÄISCHE PATENTANMELDUNG

(11) **EP 0 652 099 A2**
(43) Veröffentlichungstag der Anmeldung: **10.05.1995**
(21) Anmeldenummer: 94116215.8
(22) Anmeldetag: 14.10.1994
(51) Int. Cl.: B29C 49/00, B60J 3/02

(54) **Verfahren zur Herstellung von Sonnenblenden für Fahrzeuge, und unter Einsatz dieses Verfahrens hergestellte Sonnenblende**

(30) Priorität: 04.11.1993 IT TO000825
(71) Anmelder: C.R.S. S.r.l., 10060 Frossasco (Torino) (IT)
(72) Erfinder: Maccherrone,Alessandra, I-10090 Rosta (Turin) (IT)
(74) Vertreter: Marchitelli, Mauro

(57) **Zusammenfassung**

Verfahren zur Herstellung von Sonnenblenden, demzufolge ein hohler Blenden-Hauptteil (1a) einer Sonnenblende durch einen einzigen Formgebungsvorgang, und zwar durch Druckblasformung, hergestellt wird; hierbei weist der Formgebungsvorgang jeweils einzelne Phasen auf, in deren Verlauf zwei Platten (33) (34) eines Plastikmaterials zwischen einem Paar Formhälften (28) (29) einer zur Formgebung dienenden Preßform (26) eingelegt werden, wobei zwischen jeder Platte (33) (34) und der entsprechenden Formhälfte (28) (29) jeweils ein entsprechendes Blatt (37) eines Beschichtungsmaterials eingelegt wird, und wobei die Formhälften (28) (29) dann geschlossen werden und zwischen die Platten (33) (34) ein Strom eines unter Druck stehenden Fluids eingeblasen wird, sodaß zugleich die Verformung und die Verbindung der Platten (33) (34) untereinander erzielt wird und gleichzeitig durch einfache Kompression das Aufbringen eines jeden der zur Beschichtung dienenden Blätter (37) auf die entsprechende Platte (33) (34) erreicht wird.

## Beschreibung

Die vorliegende Erfindung bezieht sich auf ein Verfahren zur Herstellung von Sonnenblenden für Fahrzeuge, sowie auf eine mit diesem Verfahren er Sonnenblende.

Es ist bekannt, zur Herstellung von Sonnenblenden für Fahrzeuge eine im Preßformverfahren hergestellte Armierung aus Plaslikmaterial oder - alternativ - aus Metall einzusetzen und auf den gegenüberliegenden Seitenflächen der Armierung selbst eine Polsterung anzubringen, die eine oder mehrere im Schäumverfahren hergestellte Platten eines Synthetikmaterials umfaßt; anschließend werden die Polsterung und die eventuell freiliegenden Teile der Armierung abgedeckt, wobei hierzu Blätter aus Kunstleder oder aus Gewebe oder aus einem sonstigen biegsamen Material in Blattform eingesetzt werden; schließlich werden die Kanten der zur Beschichtung dienenden Blätter in Sattlertechnik oder -alternativ - durch Verschweißen oder Verkleben miteinander verbunden.

Die bekannten Sonnenblenden, die auf die oben beschriebene Art und Weise hergestellt werden, leiden hauptsächlich unter dem Mangel, daß sie vor allem ziemlich hohe Gewichte aufweisen, die sowohl auf das Vorhandensein der Armierung sowie auch auf die hohe Materialmenge zurückzuführen sind, die die Armierung selbst umgibt.

Darüber hinaus weisen die Sonnenblenden, die auf die oben beschriebene Art und Weise hergestellt werden, bei den meisten Anwendungen eine relativ niedrige Steifigkeit auf, und zwar sowohl im Hinblick auf Biegekräfte, wie auch im Hinblick auf Torsionsbewegungen, und zwar trotz des Vorhandenseins der inneren Armierungen; im allgemeinen sind derartige Sonnenblenden darüber hinaus durch ziemlich hohe Ausführungskosten gekennzeichnet, die sowohl auf der hohen Menge des einzusetzenden Materials wie auch auf der Tatsache beruhen, daß diese Materialien, nachdem sie geformt und miteinander verbunden worden sind, nicht mehr ohne weiteres recycelt und wieder eingesetzt werden können.

Das Ziel der vorliegenden Erfindung besteht darin, ein Verfahren zur Herstellung von Sonnenblenden bereitzustellen, das es ermöglicht, die zuvor dargelegten Nachteile zu vermeiden.

Entsprechend der vorliegenden Erfindung wird ein Verfahren zur Herstellung von Sonnenblenden für Fahrzeuge angegeben, wobei dieses Verfahren einzelne Phasen zur Herstellung des Hauptkörpers einer Sonnenblende umfaßt und dadurch geKennzeichnet ist, daß die Herstellung dieses Hauptkörpers der Sonnenblende durch einen einzigen Vorgang, und zwar durch Druckblasformung, erhalten wird und Phasen umfaßt, denen zufolge zugleich zwei Halbschalen geformt werden und diese Halbschalen selbst miteinander entlang den entsprechenden Außenkanten durch einfachen Druck miteinander verbunden werden.

Vorzugsweise erfolgen entsprechend dem oben festgelegten Verfahren die Formgebung und die gegenseitige Verbindung der erwähnten beiden Halbschalen dadurch, daß zwei Platten eines Plastikmaterials zwischen zwei Formhälften einer zur Formgebung dienenden Preßform eingelegt werden, wobei zwischen jeder Platte und der entsprechenden Formhälfte jeweils ein entsprechendes Blatt eines Beschichtungsmaterials eingelegt wird, und wobei die beiden Formhälften dann geschlossen werden und gleichzeitig zwischen die erwähnten Platten ein Strom eines unter Druck stehenden Fluids eingeblasen wird, sodaß zugleich die Verformung der Platten und ihre Verbindung untereinander erzielt wird und gleichzeitig durch einfache Kompression das Aufbringen eines jeden der zur Beschichtung dienenden Blätter auf der entsprechenden Platte erreicht wird.

Darüber hinaus bezieht sich die vorliegende Erfindung auf eine Sonnenblende für Fahrzeuge.

Entsprechend der vorliegenden Erfindung wird eine Sonnenblende für Fahrzeuge hergestellt, die einen Hauptkörper umfaßt, dadurch gekennzeichnet, daß es sich bei diesem Hauptkörper der Sonnenblende um einen Hohlkörper handelt, der eine erste und eine zweite Halbschale umfaßt, die durch Druckblasformen erhalten werden und miteinander mindestens entlang den jeweiligen Außenkanten fest verbunden werden.

Vorzugsweise umfaßt bei der oben festgelegten Sonnenblende jede der angegebenen Halbschalen einen geformten Abschnitt aus Plastikmaterial und ein Blatt aus Beschichtungsmaterial, das auf dem geformten Abschnitt aufgebracht und fest mit dem geformten Abschnitt selbst verbunden wird.

Nachfolgend soll eine Beschreibung der Erfindung erfolgen, unter Bezugnahme auf die beigefügten Zeichnungen, die einige - jedoch nicht einschränkend zu verstehende - Ausführungsbeispiele darstellen; in diesem Zusammenhang gilt folgendes :
Figur 1 zeigt eine Frontalansicht einer ersten bevorzugten Ausführungsform einer erfindungsgemäßen Sonnenblende;
Figur 2 ist eine Schnittzeichnung in vergrößertem Maßstab, entlang der Linie II-II aus Figur 1;
Figur 3 entspricht der Figur 1 und illustriert eine Variante eines Details der Figur 1;
Figur 4 illustriert eine Form für die Herstellung der Blende aus Figur 1, wobei die Form in geöffneter Stellung gezeigt wird;
Figur 5 zeigt die Form aus Figur 4 in geschlossener Stellung;
Figur 6 ist eine Ansicht von oben - wobei der Klarheit halber einige Teile entfernt wurden - einer zur Formgebung dienenden Gruppe, die mehrere Formen aufweist;
Figur 7 ist eine perspektivische Ansicht einer zweiten bevorzugten Ausführungsform der erfindungsgemäßen Sonnenblende; und :
Figur 8 ist analog zu Figur 2 zu sehen; sie stellt im Querschnitt die Blende aus Figur 7 dar.

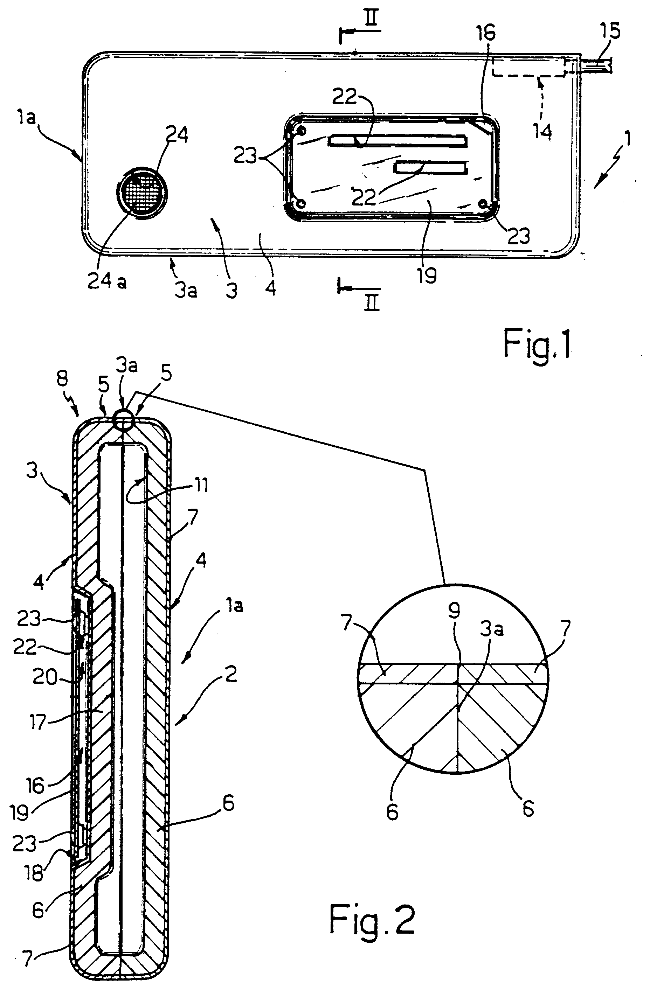

In den Figuren 1 und 2 wird durch die Kennziffer 1 eine Sonnenblende für Fahrzeuge ganz allgemein sowie speziell für Personenkraftwagen bezeichnet.

Die Blende 1 umfaßt den hohlen Körper 1a einer Sonnenblende, der seinerseits zwei durch 2 und 3 gekennzeichnete Halbschalen von im wesentlichen rechteckiger Form umfaßt, die fest miteinander entlang den jeweiligen Außenkanten 3a verbunden sind (Figur 2). Im einzelnen weist jede dieser Halbschalen 2 und 3 im Querschnitt eine im wesentlichen C-förmige Form auf. Jede Halbschale 2 und 3 weist eine Frontwand 4 und eine Seitenwand 5 auf, die sich rechtwinklig in bezug auf die entsprechende Wand 4 erstreckt, ausgehend von einer Randkante der entsprechenden Wand 4 selbst, wobei sie fest mit der Wand 5 des anderen Abschnitts 2, 3 verbunden ist.

Jede Halbschale 2, 3 wird durch einen internen geformten Abschnitt 6 festgelegt, der aus einem thermisch verformbaren plastischen Material gewonnen wird, vorzugsweise aus mit Füllstoff versehenem Polypropylen oder - alternativ - aus ABS, oder aus einem beliebigen regenerierten Plastikmaterial, sowie aus einem Blatt 7 eines Beschichtungsmaterials, vorzugsweise aus Kunstleder oder aus Textil. Das Aufbringen der Blätter 7 erfolgt auf einer äußeren Fläche des entsprechenden Abschnitts 6; gemäß den Illustrierungen in Figur 2 weisen diese Blätter jeweils Kanten 9 auf, die kopfseitig zueinander angeordnet liegen.

Die Halbschalen 2 und 3 legen in ihrem Innenraum eine Ausnehmung 11 fest, die in einer Position, die in der Nähe der Wände 5 liegt, eine Vorrichtung 14 (Figur 1) aufnimmt, die grundsätzlich bekannt ist, und die zur Befestigung des Hauptteils der Sonnenblende 1a mit einem hohlen und zur Halterung dienenden Arm 15 gedacht ist, wobei ein Endabschnitt dieses Arms einen Teil der Vorrichtung 14 bildet, und wobei ein gegenüberliegender (hier nicht dargestellter) Endabschnitt dieses Arms dazu geeignet ist, um auf eine bekannte - und nicht dargestellte - Art und Weise mit einer (nicht dargestellten) Karosserie eines (nicht dargestellten) Fahrzeugs verbunden zu werden.

Ebenfalls unter Bezugnahme auf die Figur 2 verfügt die Halbschale 3 über eine externe Ausnehmung 16, die dadurch erhalten wird, daß eine plastische Verformung eines mittleren Abschnitts der entsprechenden Wand 4 vorgenommen wird, und wobei sie durch eine eigene Rückwand 17 begrenzt wird, die im wesentlichen zu den Wänden 4 parallel verläuft. Die Ausnehmung 16 weist eine Öffnung 18 auf, abgeschlossen durch eine durchsichtige Platte 19, die in dem speziellen hier beschriebenen Beispiel aus einem durchsichtigen Material besteht, und die mit der Halbschale 3 verbunden ist, um gemeinsam mit der Ausnehmung 16 eine Tasche 20 zu begrenzen, die sich als Halterung für Gegenstände an der Sonnenblende 1 befindet.

Im speziellen hier beschriebenen Beispiel weist die Platte 19 eine rechteckige Form auf und nimmt eine Lage ein, derzufolge sich die eigenen Längsseiten der Platte in einer Position erstrecken, die parallel zu den Längsseiten der Halbschalen 2 und 3 verläuft; darüber hinaus weist die Platte 19 eine eigene Außenfläche auf, die im wesentlichen in der gleichen Ebene wie die Außenfläche der entsprechenden Wand 4 liegt. Hergestellt wird die Platte 19 aus einem Plastikmaterial, vorzugsweise durch Stanzen, oder - alternativ - durch Spritzguß. Die Platte 19 wird durch entsprechende flache und glatte Flächen begrenzt, oder aber - alternativ - durch satinierte ebene Flächen; sie verfügt über ein Paar Schlitze 22, die sich im beschriebenen Beispiel parallel zueinander und parallel zu den schon erwähnten Längsseiten der Platte 19 erstreken. Die Platte 19 ist mit der Halbschale 3 durch eine Reihe von Einrast-Knöpfen 23 verbunden, die grundsätzlich bekannt sind, und die entlang mindestens zweier Kanten der Platte 19 selbst verteilt sind. Entsprechend einer nicht dargestellten Variante werden die erwähnten beiden Kanten der Platte 19 mit der Halbschale 3 durch Elektroschweißen verbunden.

Ebenfalls unter Bezugnahme auf die Figur 1 ist die Halbschale 3 mit einer weiteren Ausnehmung 24 versehen, die im speziellen beschriebenen Beispiel in einer Position gewonnen wird, die neben der Ausnehmung 16 zu liegen kommt, und sie nimmt mindestens teilweise ein Milkrofon 24a auf, dessen (nicht dargestellte) Verkabelung innerhalb der Ausnehmung 11 verläuft und aus dieser Ausnehmung 11 selbst austritt, vorzugsweise über eine - nicht dargestellte - Öffnung, oder aber - alternativ - über den schon erwähnten und zur Halterung dienenden Arm 15.

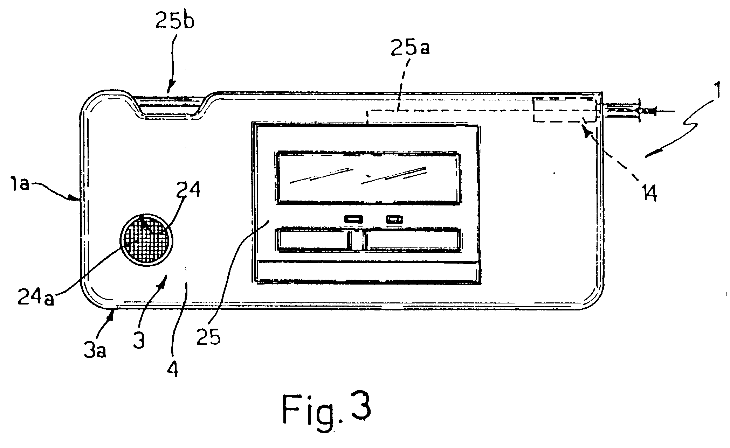

Bei der in Figur 3 dargestellten Variante verfügt die Sonnenblende 1 nicht über das Element 19, das zum Verschließen der Ausnehmung 16 dient, und innerhalb dieser Ausnehmung 16 befindet sich ein elektronischer Streckenanzeiger 25, der dazu geeignet ist, einem Benutzer sämtliche Informationen anzugeben, die erforderlich sind, um sich zum Beispiel innerhalb einer Stadt bewegen zu können. Im einzelnen weist der elektronische Anzeiger 25 eine eigene Verkabelung 25a auf, die sich ebenfalls innerhalb der Ausnehmung erstreckt, und die aus dieser Ausnehmung 11 selbst durch den Arm 15 austritt, um dann an eine externe (nicht dargestellte) Empfangsantenne angeschlossen zu werden, die an dem (nicht dargestellten) Fahrzeug angebaut ist, um unterschiedliche Signale von einem entsprechenden (nicht dargestellten) Sender zu empfangen.

Alternativ dazu tritt die erwähnte Verkabelung 25a aus der Ausnehmung 11 durch ein sekundäres Halterungselement 25b (Figur 3) aus, das sich an dem - dem Arm 15 gegenüberliegenden - Ende des Hauptkörpers 1a der Sonnenblende befindet, und das dazu geeignet ist, unter Einrasten einen Sitz aufzunehmen, der von einem (nicht dargestellten) Körper getragen wird, der an der Karosserie des (nicht dargestellten) Fahrzeugs befestigt ist.

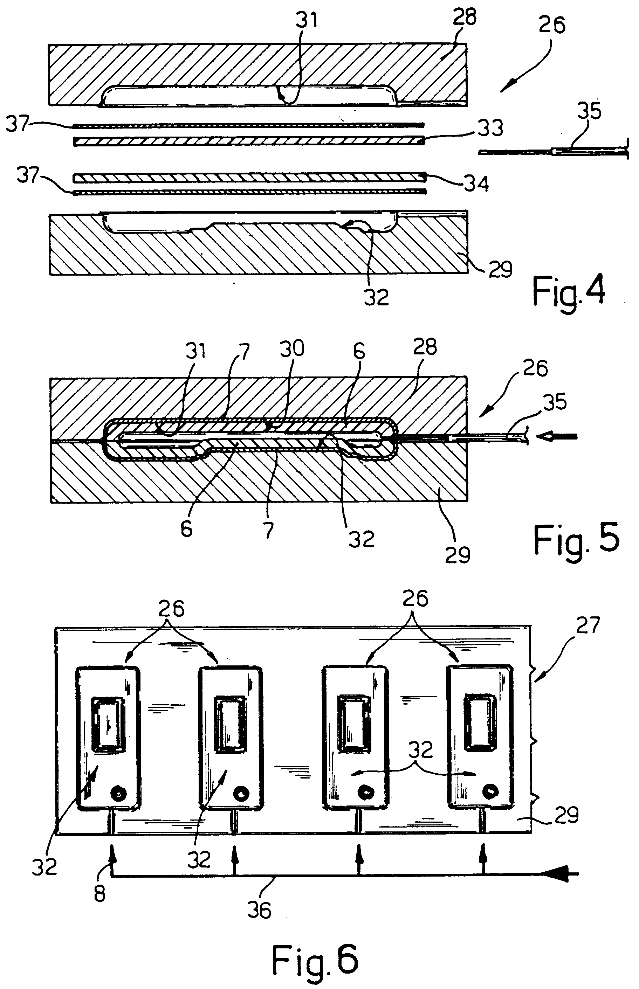

Die Formgebung der Sonnenblende 1 erfolgt innerhalb einer entsprechenden - mit Thermoregelung versehenen - Form 26, die auf einer Temperatur von ungefähr 80 Grad Celsius gehalten wird und einen Bestandteil einer zur Formgebung dienenden Gruppe 27 bildet (Abbildung 6), die mehrere Formen 26 umfaßt, die nebeneinander angeordnet sind; diese Gruppe ist dazu geeignet, gleichzeitig die Herstellung mehrerer Sonnenblenden zu gestatten.

Ebenfalls unter Bezugnahme auf die Figuren 4 und 5 umfaßt die Form 26 eine erste und eine zweite Formhälfte, die jeweils mit 28 und 29 gekennzeichnet werden, und die sich zueinander bewegen können, und zwar unter dem Schub einer bekannten und nicht dargestellten Wirkgruppe; sie bilden in ihrem Inneren eine Kammer 30 (Figur 5), begrenzt durch zwei geformte Flächen 31 und 32, wobei die Fläche 31 aus der Formhälfte 28 gewonnen wird und als komplementär zur äußeren Fläche der Halbschale 2 anzusehen ist, wohingegen die Fläche 32 aus der Formhälfte 29 gewonnen wird und komplementär zur äußeren Fläche der Halbschale 3 selbst ist.

Unter Bezugnahme auf Figur 4 erfolgt die Herstellung der Sonnenblende 1 dadurch, daß man zwischen den Formhälften 28 und 29 eine erste und eine zweite Platte einlegt, die hier mit den Kennziffern 33 und 34 bezeichnet und voneinander entfernt gehalten werden, und zwar durch das Einspritzen eines unter Druck stehenden Fluids, das von einer entsprechenden Düse 35 abgegeben wird, die in bekannter Weise mit einem bekannten Druckluftkreislauf 36 verbunden ist, der schematisch in Abbildung 6 dargestellt wird. Die Platten 33 und 34 werden beide aus Plastikmaterial hergestellt, und bevor sie in die entsprechende Form 26 eingelegt werden, werden sie auf eine Temperatur erhitzt, die vorzugsweise zwischen 140 und 180 Grad Celsius variabel ist. Innerhalb der Form 26 legt man zwischen jeder der Platten 33 und 34 und der entsprechenden Formhälfte 28 und 29 ein zugehöriges biegsames Blatt 34 ein, das nach Abschluß der Formgebung das zur Beschichtung dienende entsprechende Blatt 7 des zugehörigen Abschnitts 6 festlegt, der ebenfalls nach Abschluß der Formgebung durch eine entsprechende Platte 33, 34 festgelegt wird.

Nun werden die Formhälften 28 und 29 geschlossen; gleichzeitig wird über die Düse 35 zwischen die Platten 33 und 34 ein Fluid mit höherem Druck eingeleitet; aufgrund des Drucks, den die Formhälften 28 und 29 auf der einen Seite und auf der anderen Seite das Fluid ausüben, werden die Blätter 37 gegen die entsprechende Platte 33, 34 gepreßt und fest mit der zugehörigen Platte selbst verbunden, die sich - ebenfalls während der Zuführung des unter Druck stehenden Fluids - allmählich verformt, bis das entsprechende Blatt in Berührung mit der Oberfläche der entsprechenden Formhälfte gelangt. Ebenfalls während des Schließens der Formhälften 28 und 29 werden die jeweiligen Außenabschnitte der Platten 33 und 34 von den Formhälften 28 und 29 selbst gegeneinander gepreßt und miteinander durch einfachen Druck verklebt. Nun werden die Formhälften 28 und 29 in ihrer Schließstellung über einen bestimmten Zeitraum gehalten, der normalerweise ungefähr 60 bis 90 Sekunden beträgt; anschließend werden sie geöffnet, und der geformte Hohlkörper wird beschnitten, um den Hauptteil der Sonnenblende 1a zu erhalten. Nachfolgend wird mit der Halbschale 3 eine erste Serie der schon erwähnten Druckknöpfe 23 verbunden, während eine weitere Serie dieser Knöpfe 23 mit der Platte 19 verbunden wird; nachfolgend wird die Platte 19 in die Ausnehmung 16 eingelassen und mit der Halbschale 3 verbunden. Alternativ hierzu - entsprechend einer nicht dargestellten Variante - wird die Verbindung der schon erwähnten ersten Reihe der Knöpfe mit der Halbschale 2 gleichzeitig mit der Formgebung des Hohlkörpers 1a vorgenommen.

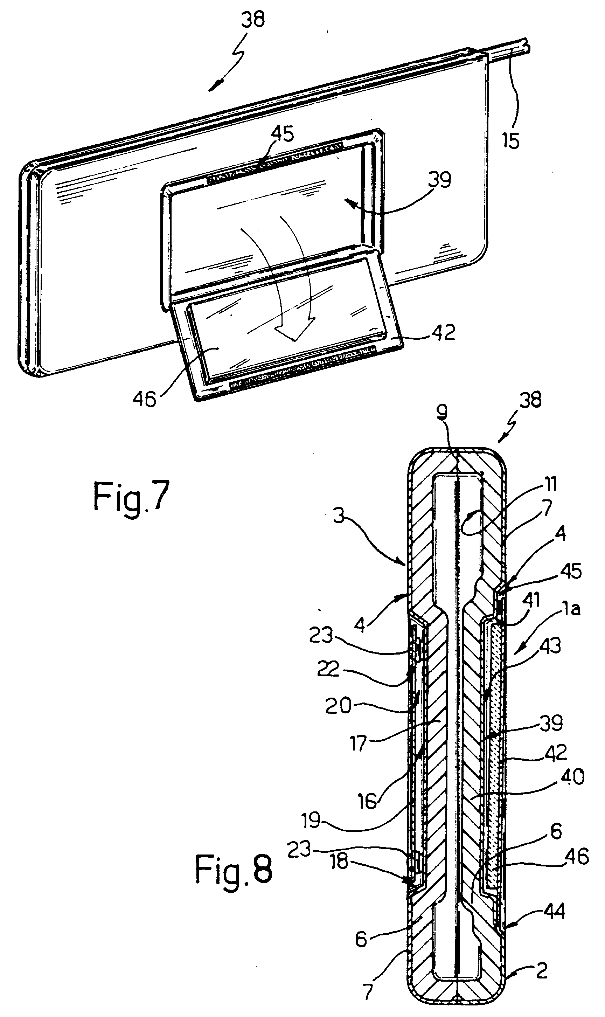

Die Ausführungsform, die in Figur 7 dargestellt wird, bezieht sich auf eine Sonnenblende 38, die der Blende 1 ähnelt, und deren Bestandteile - soweit möglich -durch die gleichen Bezugsnummern gekennzeichnet sind, die für die entsprechenden Teile der Blende 1 selbst dienen.

Im Falle der Blende 38 wird der Hauptkörper der Sonnenblende 1a durch das gleiche Verfahren gewonnen, mit dem schon der Hauptkörper 1a der Blende 1 gewonnen wurde; er unterscheidet sich vom Hauptkörper 1a der Blende 1 selbst dadurch, daß dieser Körper über eine externe Ausnehmung 39 verfügt, die innerhalb der Wand 4 der Halbschale 2 selbst in Höhe der Ausnehmung 16 gewonnen wird; man erhält sie durch plastische Verformung eines mittleren Abschnitts der Wand 4 selbst; begrenzt wird sie durch eine eigene Rückwand 40, die parallel zur Wand 4 selbst verläuft. Die Ausnehmung 39 weist eine eigene Öffnung 41 auf, die durch eine Platte 42 abgeschlossen wird, bestehend aus einem Plastikmaterial, wobei dies dazu geeignet ist, zusammen mit der Ausnehmung 39 selbst eine weitere Tasche bzw. einen Raum 43 zu begrenzen, der zur Aufnahme von Dokumenten dient und sich an der Blende 38 selbst befindet. In dem speziellen beschriebenen Beispiel präsentiert sich die Platte 42 in rechteckiger Form und ist durch ein Scharnier mit einem Abschnitt der Halbschale 2 verbunden, der neben der Öffnung 41 liegt, und zwar über ein virtuelles Scharnier 44, das dazu geeignet ist, es der Platte 42 selbst zu ermöglichen, sich zwischen einer geöffneten Position (Figur 7), in der sie den Zugang zur Ausnehmung 39 gestattet, und einer Schließstellung (Figur 8) zu drehen, in der sie die Öffnung 41 verschließt und die Tasche 43 bildet. Im einzelnen wird - wie in Figur 8 dargestellt - das Scharnier 44 dadurch gewonnen, daß man - vorzugsweise durch Elektroschweißen - eine Längsseite der Platte 42 mit der Halbschale 2 verschweißt, und daß die Platte 42 in ihrer eigenen Schließstellung durch ein zum Zurückhalten dienendes Reiß-Element 45 gehalten wird, das sich auf der gegenüberliegenden Seite der Platte 42 - in bezug auf das Scharnier 44 - befindet. Entsprechend einer nicht dargestellten Variante präsentiert die Platte 42 eine transversal verlaufende Schwächungslinie, die dazu geeignet ist, das erwähnte Scharnier 44 zu bilden, sowie einen Randbereich, der fest mit der Halbschale 2 verbunden ist, vorzugsweise über mehrere zur Verbindung dienende und einrastende Druckknöpfe.

Ebenfalls unter Bezugnahme auf die Figuren 7 und 8 trägt die Platte 42 eine Spiegelfläche 46, die mit der inneren Flache der Platte 42 selbst verbunden ist, und die eine Dicke aufweist, aufgrund derer sie lediglich einen Teil der Ausnehmung 39 einnimmt, wenn die Platte 42 sich in ihrer eigenen Schließstellung befindet.

Aus den vorstehenden Ausführungen wird ersichtlich, daß die beschriebenen Blenden 1 und 38 dadurch, daß sie einen hohlen Sonnenblenden-Körper 1a aufweisen, sich vor allem durch sehr geringe Gewichte auszeichnen, und daß sie zugleich - obwohl sie keine innenliegende und zur Versteifung dienende Armierung besitzen - eine ziemlich hohe Festigkeit - sowohl gegenüber Flexions-wie auch gegenüber Torsionsbewegungen - aufweisen.

Darüber hinaus ermöglicht es die besondere Art der Ausführung der Halbschalen 2 und 3 nicht nur, Blenden zu erhalten, die frei von beliebigen Formgebungs- und Endbearbeitungsmängeln sind, und die daher in ästhetischer Hinsicht als besonders positiv anzusehen sind; sondern darüber hinaus kann als Beschichtungsmaterial ein beliebiges Material eingesetzt werden, das in Blattform vorliegt, und insbesondere ein Beschichtungsmaterial, das die gleichen Abtönungen und Farben aufweist, wie sie zum Beispiel auch die Materialien zur Beschichtung des Himmels des (nicht dargestellten) Fahrzeugs aufweisen.

Schließlich zeichnen sich die beschriebenen Blenden 1 und 38 durch sehr geringe Herstellungskosten aus, nicht nur aufgrund der Einfachheit der Herstellung, sondern auch aufgrund der Tatsache, daß man im Hinblick auf ihre Herstellung unterschiedliche Typen von Plastikmaterialien einsetzen kann, insbesondere auch recyclingfähige oder recycelte Plastikmaterialien.

Aus den vorstehenden Ausführungen wird ersichtlich, daß an den beschriebenen Blenden 1 und 38 jeweils Abänderungen und Varianten vorgenommen werden können, die den Schutzbereich der vorliegenden Erfindung nicht verlassen. Insbesondere können andersartige Materialien sowohl zur Herstellung der Abschnitte 6 wie auch im Hinblick auf die Herstellung der Beschichtungsschicht eingesetzt werden, die durch die Blätter 7 festgelegt wird. Darüber hinaus können die Halbschalen 2 und 3 Formen aufweisen, die sich von den beschriebenen und dargestellten Formen unterscheiden, und sie können mit weiteren Ausnehmungen versehen werden, die den schon beschriebenen Ausnehmungen gleichen oder sich aber von ihnen unterscheiden, und die zum Beispiel dazu geeignet sein können, um einen Außenspiegel oder aber Mikrofone aufzunehmen, die sich vom Mikrofon 24a unterscheiden, oder um zum Beispiel Lautsprecher einer Tonanlage aufzunehmen.

Darüber hinaus kann im Falle der Blende 1 die Platte 19 eine geometrische Auslegung aufweisen, die sich von der hier beschriebenen Auslegung unterscheidet, und sie kann mit der Halbschale 3 dadurch verbunden werden, daß Vorrichtungen und Modalitäten eingesetzt werden, die sich von den beschriebenen Typen unterscheiden.

Darüber hinaus kann bei der Blende 1 die Halbschale 2 durch eine Halbschale ersetzt werden, die der Halbschale 2 der Blende 38 entspricht, die ihrerseits sowohl die Ausnehmung 43 nicht aufweisen könnte, wie auch das zugehörige Schließelement 42.

Die Verbindung der Platten 33 und 34 untereinander, wie auch die Verbindung der Platten 33 und 34 mit den Beschichtungsblättern 37 kann dadurch erfolgen, daß das Plattenmaterial durch die Erwärmung weich und klebrig wird. Darüber hinaus ist es auch denkbar und ggf. je nach verwendetem Ausgangsmaterial von Vorteil wenn die Beschichtungsblätter 37 mit einer eine Verbindung mit den Platten 33 und 34 sicherstellenden Haftvermittlerbeschichtung (nicht gezeigt) versehen werden.

## Patentansprüche

1. Verfahren zur Herstellung von Sonnenblenden (1; 38) für Fahrzeuge, wobei dieses Verfahren die Phasen der Herstellung des Hauptkörpers (1a) einer Sonnenblende umfaßt, dadurch gekennzeichnet, daß die Herstellung dieses Hauptkörpers (1a) der Sonnenblende durch einen einzigen Vorgang als Druckblasformung erfolgt, und daß sie Phasen umfaßt, in deren Verlauf die beiden Halbschalen (2) (3) gleichzeitig gebildet werden und die Halbschalen (2) (3) selbst untereinander mindestens entlang der jeweiligen Außenkanten durch einfachen Druck verbunden werden.

2. Verfahren gemäß Anspruch 1, dadurch gekennzeichnet, daß die Formgebung und die Verbindung der erwähnten beiden Halbschalen (2) (3) dadurch erfolgt, daß zwei Platten (33) (34) eines Plastikmaterials zwischen zwei Formhälften (28) (29) einer zur Formgebung dienenden Preßform (26) eingelegt werden, wobei zwischen jeder Platte (33) (34) und der entsprechenden Formhälfte (28) (29) jeweils ein entsprechendes Blatt (37) eines Beschichtungsmaterials eingelegt wird, und wobei die beiden Formhälften (28) (29) dann geschlossen werden und gleichzeitig zwischen die Platten (33) (34) ein Strom eines unter Druck stehenden Fluids eingeblasen wird, sodaß zugleich die Verformung und die Verbindung dieser Platten (33) (34) untereinander erzielt wird und gleichzeitig durch einfache Kompression das Aufbringen eines jeden der zur Beschichtung dienenden Blätter (37) auf die entsprechende Platte (33) (34) erreicht wird.

3. Verfahren gemäß Anspruch 2, dadurch gekennzeichnet, daß vor dem Schließen besagter Formhälften (28) (29) zwischen die erwähnten Platten (33) (34) ein Strom eines unter Druck stehenden Fluids eingeblasen wird, um die Platten (33) (34) selbst in Positionen zu halten, die voneinander einen Abstand aufweisen.

4. Verfahren gemäß einem beliebigen der vorstehenden Ansprüche, dadurch gekennzeichnet, daß während der Formung der erwähnten Halbschalen (2) (3) mindestens an einer der besagten Halbschalen (2) (3) mindestens eine erste Ausnehmung (16; 39) gewonnen wird, und daß mit der Halbschale (2) (3) selbst, die diese erste Ausnehmung (16) (39) aufweist, ein zum Verschließen dienendes Element (19) (42) verbunden wird, das dazu geeignet ist, zumindest teilweise die angegebene erste Ausnehmung (16, 39) zu verschließen und eine Tasche (20, 43) der Blende (1, 38) festzulegen.

5. Verfahren gemäß Anspruch 4, dadurch gekennzeichnet, daß es eine weitere Phase umfaßt, die darin besteht, daß mit der Halbschale (2) (3), die über die angesprochene erste Ausnehmung (16) verfügt, eine Reihe von Befestigungselementen (23) verbunden wird, zur Verbindung des besagten und zum Schließen dienenden Elements (19) mit der entsprechenden Halbschale (2) (3).

6. Verfahren gemäß Anspruch 4, dadurch gekennzeichnet, daß die Verbindung des besagten und zum Verschließen dienenden Elements (42) mit der entsprechenden Halbschale (2) (3) eine Phase umfaßt, derzufolge ein Scharnier (44) hergestellt wird, das zur Verbindung des zum Verschliessen dienenden Elements (42) mit der entsprechenden Halbschale (2) (3) dient.

7. Verfahren gemäß einem beliebigen der vorstehenden Ansprüche, dadurch gekennzeichnet, daß es eine Phase umfaßt, durch die an mindestens einer dieser Halbschalen (2) (3) mindestens eine zweite Ausnehmung (24) gewonnen wird, um einen elektro-akustischen Signalwandler (24a) aufzunehmen; hierbei wird die besagte zweite Ausnehmung (24) während der Formgebung des erwähnten Hauptteils (1a) der Sonnenblende gewonnen.

8. Verfahren gemäß einem beliebigen der vorstehenden Ansprüche, dadurch gekennzeichnet, daß es eine Phase zum Erwärmen besagter Platten (33; 41) umfaßt, bevor diese Platten in das Innere der besagten Form (26) eingegeben werden.

9. Verfahren gemäß Anspruch 8, dadurch gekennzeichnet, daß diese Form (26) erwärmt wird und die Form selbst (26) auf einer Temperatur gehalten wird, die unter jener Temperatur liegt, auf die die besagten beiden Platten (33, 41) erhitzt werden.

10. Sonnenblende (1, 38) für Fahrzeuge, bestehend aus einem Sonnenblenden-Körper (1a), dadurch gekennzeichnet, daß dieser Sonnenblenden-Körper (1a) ein Hohlkörper ist und eine erste (2) sowie eine zweite Halbschale (3) umfaßt, die durch Druckblasformung erhalten und miteinander mindestens entlang der jeweiligen Außenkanten verbunden werden.

11. Blende gemäß Anspruch 10, dadurch gekennzeichnet, daß jede dieser beiden Halbschalen (2) (3) einen geformten Abschnitt (6) aus Plastikmaterial umfaßt, sowie ein Blatt (7) eines Beschichtungsmaterials, das auf dem geformten Abschnitt (6) aufgebracht und fest mit diesem geformten Abschnitt selbst (6) verbunden wird.

12. Blende gemäß Anspruch 10 oder 11, dadurch gekennzeichnet, daß mindestens eine dieser Halbschalen (2) (3) zumindest eine erste Ausnehmung (16; 39) aufweist, sowie dadurch gekennzeichnet, daß sie ein Element (19, 42) zum Verschließen umfaßt, das dazu geeignet ist, zumindest partiell die angegebene erste Ausnehmung (16, 39) zu verschließen, um gemeinsam mit der ersten Ausnehmung (16, 39) selbst eine entsprechende Tasche (20, 43) der Blende (1, 37) festzulegen, wobei weitere Verbindungsmittel (23, 44) vorgesehen sind, um das erwähnte und zum Verschließen dienende Element (19, 42) mit der entsprechenden Halbschale (2) (3) zu verbinden.

13. Blende gemäß Anspruch 12, dadurch gekennzeichnet, daß das angegebene und zum Verschließen dienende Element (19) durch einen durchsichtigen Körper gebildet wird.

14. Blende gemäß Anspruch 12 oder 13, dadurch gekennzeichnet, daß das angegebene und zum Verschließen dienende Element (19) mindestens einen Schlitz (22) aufweist.

15. Blende gemäß einem der Ansprüche von 12 bis 14, dadurch gekennzeichnet, daß die angegebenen weiteren Verbindungsmittel jeweils Verbindungselemente (23) umfassen, die einrasten.

16. Blende gemäß einem beliebigen der Ansprüche 12 bis 14, dadurch gekennzeichnet, daß die angegebenen weiteren Verbindungsmittel jeweils Scharnier-Hilfsmittel (44) umfassen, die dazu geeignet sind, eine Drehung des angegebenen Schließelements (42) in Bezug auf die jeweilige Halbschale (2) (3) zu ermöglichen, und zwar zwischen einer geöffneten und einer geschlossenen Stellung, wobei das Element (42) selbst zumindest partiell die angegebene erste Ausnehmung (39) verschließt, um diese Tasche (43) zu bilden.

17. Blende gemäß` Anspruch 16, dadurch gekennzeichnet, daß sie einen Spiegelkörper (46) umfaßt, der fest mit einer Fläche des genannten Schließelements (42) verbunden ist, wobei dieser Spiegelkörper (46) in Inneren der angegebenen ersten Ausnehmung (43) untergebracht ist, wenn das angegebene Schließelement (42) sich in der eigenen Schließstellung befindet.

18. Blende gemäß einem beliebigen der Ansprüche 10 bis 17, dadurch gekennzeichnet, daß zumindest eine der angegebenen Halbschalen (2) (3) zumindest eine zweite Ausnehmung (24) aufweist, und dadurch gekennzeichnet, daß sie einen elektroakustischen Signalwandler (24a) umfaßt, der sich zumindest teilweise innerhalb der angegebenen zweiten Ausnehmung (24) befindet.

19. Blende gemäß einem beliebigen der Ansprüche 10 bis 18, dadurch gekennzeichnet, daß eine der angegebenen Halbschalen (2) (3) eine dritte Ausnehmung (16) aufweist, sowie dadurch gekennzeichnet, daß sie einen elektronischen Streckenanzeiger (25) umfaßt, der sich zumindest teilweise innerhalb der angegebenen dritten Ausnehmung (16) befindet; hierbei verfügt der angegebene elektronische Streckenanzeiger (25) über eine eigene Verkabelung (25a), die innerhalb des erwähnten Hauptteils (1a) der Sonnenblende verläuft und aus diesem Hauptteil (1a) der Sonnenblende selbst herausragt, um an eine Empfangsantenne angeschlossen zu werden.

20. Verfahren zur Verwirklichung von Sonnenblenden für Fahrzeuge, im wesentlichen wie vorstehend beschrieben, unter Bezugnahme auf eine beliebige der als Anlage beigegebenen Figuren.

21. Sonnenblende für Fahrzeuge, im wesentlichen wie beschrieben, unter Bezugnahme auf eine beliebige der als Anlage beigegebenen Figuren.
